# EUROPEAN PATENT APPLICATION

(11) **EP 2 977 249 A1**
(43) Date of publication of application: **27.01.2016**
(21) Application number: 14178569.1
(22) Date of filing: 25.07.2014
(51) Int. Cl.: B60J 7/16

(54) **Roof hatch**

(71) Applicant: Spheros-Parabus Ltd, 20360 Turku (FI)
(72) Inventor: Broens, Renoldus, FI-24240 Salo (FI)
(74) Representative: Turun Patenttitoimisto Oy

(57) **Abstract**

The present invention provides a roof hatch (100), which comprises a frame (101) attachable to an opening (102) in a roof (103) of a vehicle, a lid (104) arranged in connection with the frame (101), and at least one actuator (105) configured to move the lid (104) with respect to the frame (101). Each of the at least one actuator (105) comprises a rotatable member (201, 301, 401) attached to the frame (101), a leaf spring (206) having a first and a second end, the first end of the leaf spring (206) being attached to the rotatable member (201, 301, 401) and the second end of the leaf spring (206) being attached to the frame (101), a connecting member (107) having a first and a second end, the first end of the connecting member (107) being connected to the leaf spring (206) and the second end of the connecting member being connected to the lid (104), and rotating means (108, 203, 204, 205, 303, 304) configured to rotate the rotatable member (201, 301, 401) so that the lid (104) can be moved with respect to the frame (101).

## Description

### TECHNICAL FIELD OF THE INVENTION

The present invention relates to a roof hatch according to the preamble of the appended independent claim.

### BACKGROUND OF THE INVENTION

Roof hatches are used in various vehicles, such as cars, buses and lorries, for ventilation and illumination purposes. Roof hatches have also been designed to be used as emergency exits.

A conventional roof hatch for a vehicle comprises a frame that is mountable in an opening in a roof of a vehicle, and a lid that is attached to the frame and arranged to be movable relative to the frame between an open and a closed position. The lid is moved with an opening and closing mechanism that is operated manually or electrically. Various opening and closing mechanisms are known in the prior art.

Patent document EP 2 692 562 A1 discloses a roof hatch that comprises two handles fitted on the inner face of a lid to be able to manually push the lid away from a frame or pull the lid towards the frame so as to actuate opening and closing mechanisms. Each opening and closing mechanism comprises a spring piston having its ends hinged to first arms of two cranks, which are mounted in rotary manner on the frame. Second arms of the cranks are hinged to two brackets, which are fixed to the lid. The thrust of the spring piston holds the lid in the open position or in the closed position.

Patent document EP 1 457 375 A1 discloses a roof hatch that comprises two opening and closing mechanisms pivotally connecting opposite sides of a lid to a frame. Each opening and closing mechanism has two lever members pivotally connected to the frame at one end, and two plungers that are connected to the respective lever members at the opposite end and that extend into opposite ends of a tube that is connected to the lid. A compression spring in the tube biases the two plungers away from each other. The lever members are associated with a drive mechanism that pivots the lever members towards or away from each other to raise or lower its side of the lid with respect to the frame.

A problem associated with the roof hatches disclosed in the above-mentioned patent documents is that the opening and closing mechanisms are structurally very complex and are thus susceptible to damage. Another problem is that a large force is needed to use the opening and closing mechanisms for opening and closing the roof hatch. Still another problem is that a force that holds the lid in the open or the closed position is small. Due to this an external force, such as a force produced by air flow, that affects the lid may easily open or close the roof hatch.

### OBJECTIVES OF THE INVENTION

It is an objective of the present invention to reduce or even eliminate the prior art problems presented above.

It is an objective of the present invention to provide a roof hatch for a vehicle. In more detail, it is an objective of the invention to provide a roof hatch that can be opened and closed with a small force. It is also an objective of the invention to provide a roof hatch that provides a large force to hold the roof hatch open or closed.

It is a further objective of the invention to provide a roof hatch that is robust, structurally simple and easy to manufacture.

In order to realise the above-mentioned objectives, the roof hatch according to the invention is characterised by what is presented in the characterising part of the appended independent claim. Advantageous embodiments of the invention are described in the dependent claims.

### DESCRIPTION OF THE INVENTION

A typical roof hatch according to the invention comprises a frame attachable to an opening in a roof of a vehicle, a lid arranged in connection with the frame, and at least one actuator configured to move the lid with respect to the frame. In a typical roof hatch according to the invention each of the at least one actuator comprises a rotatable member attached to the frame, a leaf spring having a first and a second end, the first end of the leaf spring being attached to the rotatable member and the second end of the leaf spring being attached to the frame, a connecting member having a first and a second end, the first end of the connecting member being connected to the leaf spring and the second end of the connecting member being connected to the lid, and rotating means configured to rotate the rotatable member so that the lid can be moved with respect to the frame.

The roof hatch according to the invention is intended to be installed in connection with an opening on a roof of a vehicle, such as a car, a bus or a lorry. The roof hatch is opened and closed using the at least one actuator, which connects the lid to the frame. Each of the at least one actuator is configured to move the part of the lid to which it is connected between two positions. Each of the at least one actuator can be manually and/or electrically operated. The roof hatch may comprise, for example, one, two or four actuators.

The lid is moved relative to the frame by rotating the rotatable member around its rotation axis with the rotating means. By rotating the rotatable member in a first direction of rotation, the lid moves away from the frame, i.e. the roof hatch opens. By rotating the rotatable member in a second direction of rotation opposite to the first direction of rotation, the lid moves towards the frame, i.e. the roof hatch closes. The rotation axis of the rotatable member is preferably perpendicular to the normal of the surface of the lid.

The first end of the leaf spring is attached to the rotatable member, and the second end of the leaf spring is attached to the frame in such a manner that the leaf spring is in a curved shape. This means that the distance between the attachment points of the leaf spring is smaller than the length of the leaf spring. The rotation of the rotatable member changes the shape of the leaf spring, which is bendable in a plane perpendicular to the rotation axis of the rotatable member. As the shape of the leaf spring changes, i.e. the leaf spring bends, due to the rotation of the rotatable member, the connecting member that is connected between the lid and the leaf spring moves the lid relative to the frame.

The shape of the leaf spring depends on the distance between the ends versus the length of the leaf spring, as well as on the position of the rotatable member and the way the ends of the leaf spring are attached to the rotatable member and to the frame. The first end and the second end of the leaf spring can be fixedly or pivotally attached to the rotatable member and the frame, respectively. The first end of the leaf spring is preferably attached at a distance from the rotation axis of the rotatable member.

The leaf spring can be a metal strip that is made, for example, of stainless steel or spring steel. The length of the leaf spring can be, for example, 15-40 cm or preferably 20-30 cm. The width of the leaf spring can be, for example, 10-40 mm or preferably 20-30 mm. The thickness of the leaf spring can be, for example, 0.4-2.0 mm or preferably 0.8-1.2 mm.

The connecting member is connected between the leaf spring and the lid for transferring the movement of the leaf spring to the lid. The first end of the connecting member is preferably connected to a point of the leaf spring at which the force that would be needed to move the leaf spring is the largest. The connecting member can be attached to the leaf spring and the lid using suitable attaching means such as screws or an adhesive. The connecting member can be, for example, a rod or a spacer. The length of the connecting member can be, for example, 3-10 cm or preferably 4-6 cm. The connecting member can be made, for example, of a metal, such as steel, stainless steel or aluminium, or a plastic, such as PBT, POM, ABS, PP, PC, PMMA, nylon or any other plastic that can withstand the required stresses and strains over the lifetime of the roof hatch (about 10-15 years).

The frame may consist of one or more frame parts, which can have different shapes and sizes. The frame part can be, for example, a profile having a groove that is suitable to receive an edge of the opening. The frame parts can be separate or be connected to each other. One or more of the frame parts can be provided with an actuator for moving the lid with respect to the frame. The frame is preferably attached to the edge of the opening using suitable attaching means such as screws or an adhesive. The frame can be attached to the opening with a seal that runs around the edge of the opening and is arranged between the frame and the opening. The frame that has been attached to the opening can be such that it extends around the edge of the opening. The frame can be made, for example, of a metal, such as aluminium or stainless steel, or a plastic, such as PBT, POM, ABS, PP, PC, PMMA, nylon, or any other plastic that can withstand the required stresses and strains over the lifetime of the roof hatch (about 10-15 years).

The lid is attached to the frame with the at least one actuator. The lid can be a plane or a curved plane, and is preferably dimensioned to cover the opening. The lid can be made, for example, of a plastic, such as ABS, PP, PC, PMMA or any other plastic that can withstand the required stresses and strains over the lifetime of the roof hatch (about 10-15 years), or a metal, such as aluminium, steel or stainless steel. Preferably, the lid is made of a transparent material, such as tempered or safety glass.

An advantage of the roof hatch according to the invention is that it can be opened and closed with a small force. Another advantage is that the roof hatch provides a large force to hold the roof hatch open or closed. Thus an external force, such as a force produced by air flow, that affects the lid may not easily open or close the roof hatch. Still another advantage is that the roof hatch is robust, structurally simple and easy to manufacture. Still another advantage is that the actuator is very compact and requires very little space.

According to an embodiment of the invention the first end of the leaf spring is attached at a distance from the rotation axis of the rotatable member. The larger is the distance between the first end of the leaf spring and the rotation axis of the rotatable member, the smaller is the rotation angle that is needed to move the lid between an open and a closed position.

According to an embodiment of the invention the second end of the leaf spring is fixedly attached to the frame. This means that the second end of the leaf spring cannot pivot relative to the frame. The leaf spring can, however, bend near the second end as the rotatable member is rotated with the rotating means. Therefore the highest point of the leaf spring, while bended up or down, is closer to the rotation point. With the rotational point facing the edge of the roof hatch, when one side of the roof hatch is opened that means that the displacement by rotation on the other side of the roof hatch is reduced.

According to an embodiment of the invention the second end of the leaf spring is pivotally attached to the frame. The second end of the leaf spring is preferably attached to the frame by a pivot pin. The second end of the leaf spring can then rotate around the pivot pin as the rotatable member is rotated with the rotating means.

According to an embodiment of the invention the first end of the connecting member is connected to the peak point of the leaf spring. The peak point of the leaf spring is a point that moves the most when the lid is moved between an open and a closed position. The peak point of the leaf spring is situated closer to the first end than the second end of the leaf spring. An advantage of connecting the connecting member to the peak point of the leaf spring is that the lid is held at its open and closed position with the largest force.

According to an embodiment of the invention the rotatable member is a worm wheel mounted on a pivot pin, and the rotating means comprises a worm arranged to engage with the worm wheel, and an electric motor connected to a shaft of the worm and configured to rotate the worm. The worm wheel is rotatably arranged on the pivot pin that is attached to the frame. The worm wheel can be a sector wheel. The worm that meshes with the worm wheel can be rotated with the electric motor in opposite directions, thereby allowing the worm wheel to be driven in both the first and the second direction of rotation. The shaft of the worm is perpendicular to the pivot pin. An advantage of this worm drive assembly is that it allows the lid to be moved with a low-torque electric motor.

According to an embodiment of the invention the first end of the leaf spring is attached to the perimeter of the worm wheel. This enables the lid to be moved between the open and the closed position with a small rotation angle of the worm wheel.

According to an embodiment of the invention the rotatable member is a first gear wheel mounted on a pivot pin, and the rotating means comprises a second gear wheel arranged to engage with the first gear wheel, and an electric motor that is connected with a shaft to the second gear wheel and configured to rotate the second gear wheel. The first gear wheel is rotatably arranged on the pivot pin that is attached to the frame. The second gear wheel that meshes with the first gear wheel can be rotated with the electric motor in opposite directions, thereby allowing the first gear wheel to be driven in both the first and the second direction of rotation. The shaft of the second gear wheel is parallel to the pivot pin. The first and the second gear wheel can be a sector wheel. Preferably, the first gear wheel is larger than the second gear wheel, i.e. the first gear wheel has more teeth than the second gear wheel. This allows using a low-torque electric motor.

According to an embodiment of the invention the first end of the leaf spring is attached to the perimeter of the first gear wheel. This enables the lid to be moved between the open and the closed position with a small rotation angle of the first gear wheel.

According to an embodiment of the invention the rotatable member is a rod having a first and a second end, the first end of the rod being attached to the first end of the leaf spring and the second end of the rod being attached to the frame by a pivot pin. The second end of the rod is rotatably arranged on the pivot pin that is attached to the frame. The rod enables the lid to be moved between the open and the closed position with a small rotation angle. The length of the rod can be, for example, 10-40 mm.

According to an embodiment of the invention the rotating means comprises a lever attached to the rotatable member for rotating the rotatable member manually. The roof hatch may comprise one lever for each actuator. It is also possible to operate actuators in pairs, so that one lever is used to rotate the rotatable members of two actuators. If the rotatable member is a rod, the lever is preferably attached to the second end of the rod. If the rotatable member is a worm wheel or a first gear wheel, the rod is preferably attached to the perimeter of the wheel.

According to an embodiment of the invention the connecting member comprises a ball joint or a flexible joint allowing pivotal movement between the lid and the leaf spring. As the rotatable member is rotated, the leaf spring bends and tilts at the point to which the first end of the connecting member is connected. The purpose of the ball joint or the flexible joint is to minimize the effects of these movements to the lid, and thereby to increase the durability of the roof hatch.

According to an embodiment of the invention the frame comprises a plurality of frame parts provided with an actuator. The frame may comprise, for example, four frame parts, each of which is provided with an actuator. These four frame parts can be attached, for example, at each corner of a rectangular opening.

According to an embodiment of the invention the roof hatch comprises an actuator at each corner of the opening.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

### BRIEF DESCRIPTION OF THE DRAWINGS

- Fig. 1: illustrates a roof hatch according to an embodiment of the invention,
- fig. 2: illustrates a first example of an actuator that can be used in the roof hatch of fig. 1,
- fig. 3: illustrates a second example of an actuator that can be used in the roof hatch of fig. 1, and
- fig. 4: illustrates a third example of an actuator that can be used in the roof hatch of fig. 1.

### DETAILED DESCRIPTION OF THE DRAWINGS

The same reference signs are used of the same or like components in different embodiments.

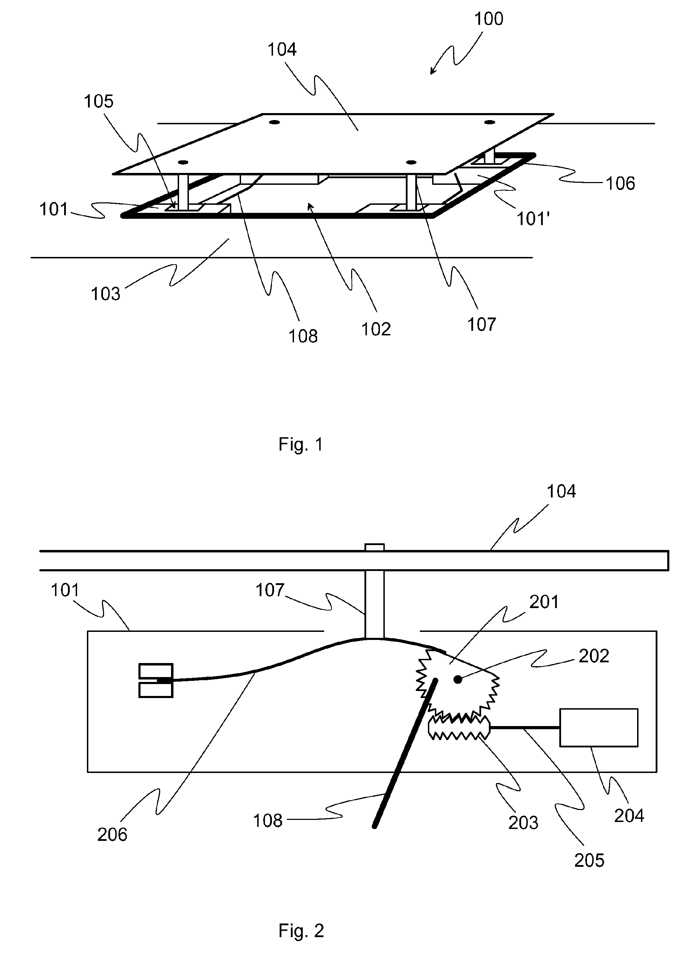

Fig. 1 illustrates a roof hatch according to an embodiment of the invention. The roof hatch 100 comprises a frame 101 that comprises four frame parts 101', which are attached to an edge of an opening 102 in a roof 103 of a vehicle. The frame parts 101' are attached near the corners of the opening 102 that is rectangular. The roof hatch 100 comprises a lid 104 for covering the opening 102, and one actuator 105 attached to each frame part 101' for moving the lid 104 with respect to the frame 101 so that the roof hatch 100 can be opened and closed. The opening 102 is provided with a seal 106 that runs around the edge of the opening 102. When the roof hatch 100 is closed, the edge of the lid 104 is in contact with the seal 106.

The roof hatch 100 is opened and closed using the actuators 105 with which the lid 104 is connected to the frame 101. Each of the actuators 105 can move the part of the lid 104 to which it is connected between an open and a closed position. The movement of each actuator 105 is transferred with a connecting member 107 to the lid 104. The roof hatch 100 comprises two levers 108 for manually operating the actuators 105. Each of the levers 108 is attached to two actuators 105.

Examples of actuators that can be used in the roof hatch of fig. 1 are shown in figs. 2 to 4.

Fig. 2 illustrates a first example of an actuator that can be used in the roof hatch of fig. 1. The actuator 105 comprises a worm wheel 201 mounted on a pivot pin 202 that is attached to the frame 101, a worm 203 that meshes with the worm wheel 201, and an electric motor 204 connected to a shaft 205 of the worm 203 for rotating the worm 203 and thereby the worm wheel 201. The pivot pin 202 is arranged perpendicular to the normal of the surface of the lid 104, and the shaft 205 of the worm 203 is arranged perpendicular to the pivot pin 202.

The actuator 105 comprises a leaf spring 206. The first end of the leaf spring 206 is attached to the worm wheel 201 and the second end of the leaf spring 206 is fixedly attached to the frame 101. The first end of the connecting member 107 is connected to the peak point of the leaf spring 206 and the second end of the connecting member 107 is connected to the lid 104.

The leaf spring 206 is attached in such a manner that it is in a curved shape. The shape of the leaf spring 206 is changed by rotating the worm wheel 201 in a first or a second direction of rotation with the worm 203 and the electric motor 204. As the shape of the leaf spring 206 changes due to the rotation of the worm wheel 201, the connecting member 107 that is connected between the lid 104 and the leaf spring 206 moves the lid 104 relative to the frame 101. By rotating the worm wheel 201 in the first direction of rotation, the lid 104 moves away from the frame 101, i.e. the roof hatch 100 opens. By rotating the worm wheel 201 in the second direction of rotation, the lid 104 moves towards the frame 101, i.e. the roof hatch 100 closes. The actuator 105 can alternatively be operated manually using the lever 108, which is attached to the worm wheel 201.

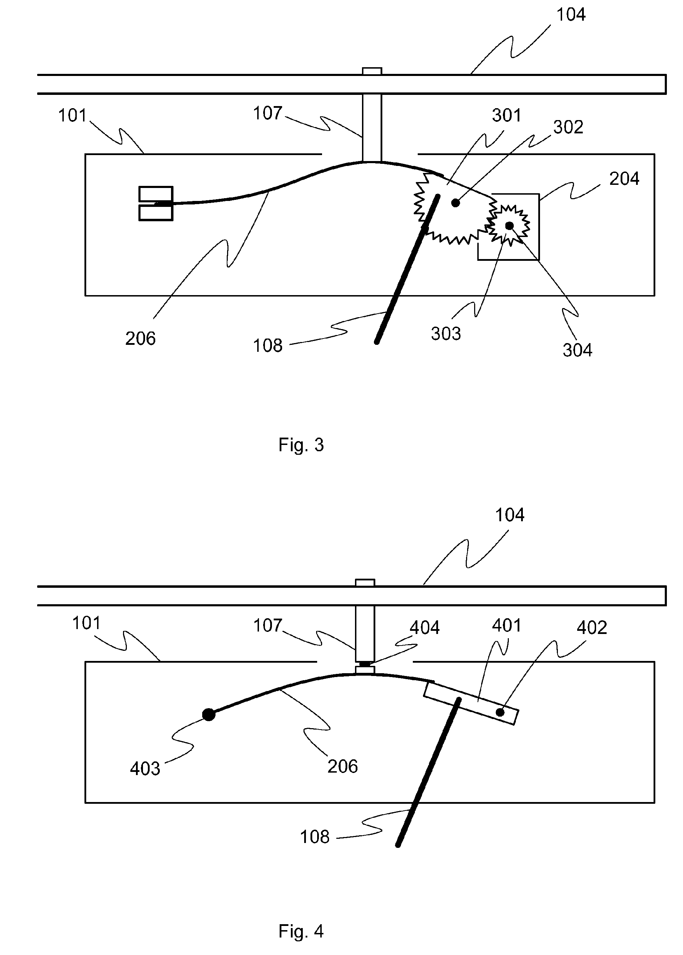

Fig. 3 illustrates a second example of an actuator that can be used in the roof hatch of fig. 1. The actuator 105 comprises a first gear wheel 301 mounted on a pivot pin 302 that is attached to the frame 101, a second gear wheel 303 that meshes with the first gear wheel 301, and an electric motor 204 connected with a shaft 304 to the second gear wheel 303 for rotating the second gear wheel 303 and thereby the first gear wheel 301. The diameter of the first gear wheel 301 is larger than the diameter of the second gear wheel 303. The pivot pin 302 is arranged perpendicular to the normal of the surface of the lid 104, and the shaft 304 is arranged parallel to the pivot pin 302.

The first end of the leaf spring 206 is attached to the first gear wheel 301 and the second end of the leaf spring 206 is fixedly attached to the frame 101. The first end of the connecting member 107 is connected to the peak point of the leaf spring 206 and the second end of the connecting member 107 is connected to the lid 104.

The lid 104 is moved with respect to the frame 101 by rotating the first gear wheel 301 with the second gear wheel 303 that is driven via the shaft 304 by the electric motor 204. Alternatively, the first gear wheel 301 can be rotated using the lever 108, which is attached to the first gear wheel 301. The first gear wheel 301 that is rotated bends the leaf spring 206, whereby the lid 104 is moved away or towards the frame 101.

Fig. 4 illustrates a third example of an actuator that can be used in the roof hatch of fig. 1. The actuator 105 comprises a rod 401, the first end of which is attached to the first end of the leaf spring 206 and the second end of which is attached to the frame 101 by a pivot pin 402. The second end of the leaf spring 206 is attached to the frame 101 by a pivot pin 403, whereby the second end of the leaf spring 206 can rotate around the pivot pin 403 as the rod 401 is rotated around the pivot pin 402. The first end of the connecting member 107 is connected to the peak point of the leaf spring 206 and the second end of the connecting member 107 is connected to the lid 104. The connecting member 107 comprises a ball joint 404 allowing pivotal movement between the lid 104 and the leaf spring 206. The actuator of fig. 4 is manually operated. The rod 401 is rotated by the lever 108, which is attached to the second end of the rod 401.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A roof hatch, comprising:
- a frame attachable to an opening in a roof of a vehicle,
- a lid arranged in connection with the frame, and
- at least one actuator configured to move the lid with respect to the frame,
**characterised in that** each of the at least one actuator comprises:
- a rotatable member attached to the frame,
- a leaf spring having a first and a second end, the first end of the leaf spring being attached to the rotatable member and the second end of the leaf spring being attached to the frame,
- a connecting member having a first and a second end, the first end of the connecting member being connected to the leaf spring and the second end of the connecting member being connected to the lid, and
- rotating means configured to rotate the rotatable member so that the lid can be moved with respect to the frame.

2. The roof hatch according to claim 1, **characterised in that** the first end of the leaf spring is attached at a distance from the rotation axis of the rotatable member.

3. The roof hatch according to claim 1 or 2, **characterised in that** the second end of the leaf spring is fixedly attached to the frame.

4. The roof hatch according to claim 1 or 2, **characterised in that** the second end of the leaf spring is pivotally attached to the frame.

5. The roof hatch according to any of the preceding claims, **characterised in that** the first end of the connecting member is connected to the peak point of the leaf spring.

6. The roof hatch according to any of the preceding claims, **characterised in that** the rotatable member is a worm wheel mounted on a pivot pin, and the rotating means comprises:
- a worm arranged to engage with the worm wheel, and
- an electric motor connected to a shaft of the worm and configured to rotate the worm.

7. The roof hatch according to claim 6, **characterised in that** the first end of the leaf spring is attached to the perimeter of the worm wheel.

8. The roof hatch according to any of claims 1 to 5, **characterised in that** the rotatable member is a first gear wheel mounted on a pivot pin, and the rotating means comprises:
- a second gear wheel arranged to engage with the first gear wheel, and
- an electric motor that is connected with a shaft to the second gear wheel and configured to rotate the second gear wheel.

9. The roof hatch according to claim 8, **characterised in that** the first end of the leaf spring is attached to the perimeter of the first gear wheel.

10. The roof hatch according to any of claims 1 to 5, **characterised in that** the rotatable member is a rod having a first and a second end, the first end of the rod being attached to the first end of the leaf spring and the second end of the rod being attached to the frame by a pivot pin.

11. The roof hatch according to any of the preceding claims, **characterised in that** the rotating means comprises a lever attached to the rotatable member for rotating the rotatable member manually.

12. The roof hatch according to any of the preceding claims, **characterised in that** the connecting member comprises a ball joint or a flexible joint allowing pivotal movement between the lid and the leaf spring.

13. The roof hatch according to any of the preceding claims, **characterised in that** the frame comprises a plurality of frame parts provided with an actuator.

14. The roof hatch according to any of the preceding claims, **characterised in that** the roof hatch comprises an actuator at each corner of the opening.
